# EUROPEAN PATENT SPECIFICATION

(11) **EP 3 884 192 B1**
(45) Date of publication and mention of the grant of the patent: **08.01.2025**
(21) Application number: 19839163.3
(22) Date of filing: 20.11.2019
(51) Int. Cl.: F16L 11/08, E21B 1/00, B63B 27/34

(54) **COMPOSITE HOSE REINFORCED WITH A HELICAL WIRE HAVING A CROSS-SECTION APPROXIMATING THE SHAPE OF A POLYGON**
VERBUNDSCHLAUCH VERSTÄRKT MIT EINEM SPIRALFÖRMIGEN DRAHT MIT EINEM QUERSCHNITT, DER SICH DER FORM EINES POLYGONS ANNÄHERT
TUYAU COMPOSITE RENFORCÉ PAR UN FIL HÉLICOÏDAL AYANT UNE SECTION TRANSVERSALE SE RAPPROCHANT DE LA FORME D'UN POLYGONE

(43) Date of publication of application: 29.09.2021
(73) Proprietor: MATEC GROUP S.R.L., 20068 Peschiera Borromeo (MI) (IT)
(72) Inventor: ORFEI, Mario, 20068 Peschiera Borromeo (MI) (IT)
(86) International application number: PCT/IT2019/000108
(87) International publication number: WO 2021/100066

(56) References cited:
- EP-A2- 2 113 700
- WO-A1-2014/117780
- US-A1- 2006 186 664

## Description

The present invention regards essentially an improvement in the flexible composite hoses, that are used mainly for transportation of fluids in the field of chemical and/or petrochemical industry, and in the sectors of services and transportation.

The document US 2006/0186664 A1 shows a helical stacked composite hose comprising a helical body being a helical long strip; each cross section of the helical body having a flat portion facing toward a center of the helical body; an inner cloth enclosing the helical body; an inner surface of the inner cloth having a flat cambered shape; a plurality of thin film layers enclosing the inner cloth; an outer cloth winding around the film layers so as to form as a round cylinder layer; an outer helical spring being installed around the outer cloth; a rubber cover being formed with a recess; the inner cloth, film layers, outer cloth being embedded into the recess; a ferrule enclosing the outer surface of the rubber cover and the outer cloth; a joint having a stepped outer layer. A cross section of the strip of the helical body is a triangular, pentagon and semi-round.

As known, a flexible composite hose comprises a cylindrical multi-layered surface, composed of some layers made of different materials, situated between an inner reinforcement spiral and an outer reinforcement spiral, so that the inner and outer spirals express some opposing forces that maintain a robust general structure of the hose.

Nowadays, the reinforcement spiral are composed of a metallic wire, that is helically wrapped around, where the same metallic wire has a cross-section shaped as a circle. Therefore, the different layers that compose the hose are kept together just by the mechanical action of the two spirals, because the layers are not glued neither vulcanised each other. That leads to a significant advantage to achieve hoses having a high level of flexibility, even for large diameters, and to the high versatility of possibility to use different materials for the inner components.

However, with reference to hoses having a large diameter (higher than 100 mm), a hard technical problem has been observed, represented by the *collapse of the inner spiral,* especially due to the intense use, to the frequent movements and to the curving angles necessary during the field operations.

What happens indeed is that a translation of the inner spiral occurs, in respect to the longitudinal axis, and due to causes that are not easily detectable in a following assessment and study. More exactly, the inner spiral is composed of a metallic wire, that is helically wrapped around, where the same metallic wire has a cross-section shaped as a circle. Therefore, it tends to "slide", moving from it initial position up to a point where the mechanical forces of the inner and outer spirals are no more opposed each other, and then the hoses collapses as a consequence.
When that happens, all the wire composing the inner spiral moves, and the layers belonging to the multi-layered surface accumulate each other, up to the closure of the inner passage, making the flexible hose completely out of order.

The above hard problem is solved by the present invention, that has as a main objective to achieve a flexible composite hose for transportation of fluids, in the field of chemical and/or petrochemical industry, having an inner reinforcement spiral and an outer reinforcement spiral, where the general structure of the hose is kept robust and compact, even for hoses having a large diameter, in front of intense external forces, narrow curving angles, and a use in the long term.

Another objective is that the inner wall hose presents a surface that would be as smooth as possible, having few protrusions, achieving an optimal passage of fluids characterised by a high speed of transfer, minimizing the pressure drop caused by friction, turbulence, partial occlusions and/or other fluid-dynamic effects.

Another further objective is that, even with the inner wall hose presenting a surface as smooth as possible, and having few protrusions, it could result to be not perfectly flat, so that to minimize the contact area with a mandrel, during the factory production process, and therefore to maintain a minimal friction that facilitates the longitudinal removal of said hose from the same mandrel.

Another further objective is that the composite tube continues to have a simple structure as well as in the prior art, that means to be composed by few essential components, in order to be produced on a large industrial scale, by a production process that would be economically sustainable, competitive on the market, technically efficient, and using materials that are common and easy to find.

Therefore, it is specific subject of the present invention a flexible composite hose, for transportation of fluids in the field of chemical and/or petrochemical industry, comprising:
- a cylindrical multi-layered surface, composed of some layers made of different materials, situated between an inner reinforcement spiral and an outer reinforcement spiral, so that the inner and outer spirals express some opposing forces that maintain a robust general structure of the hose,
characterized in that:
- said inner reinforcement spiral is composed of a metallic wire, that is helically wrapped around, where the same metallic wire has a cross-section having a shape that approximates the shape of a polygon, more exactly it has a shape of a polygon in which: all the vertexes are rounded, and at least one side is curved with a concavity directed outside;
- said cross-section approximating a polygon presents said curved side placed aligned to the inner wall of the hose, and the opposite vertex placed as a cusp into the inner side of said cylindrical multi-layered surface, all along the length of the hose,
so that three effects are achieved: the first is that said inner spiral is anchored more effectively to said cylindrical multi-layered surface, avoiding therefore any sliding motion, and increasing strength and robustness of the general structure of the hose, even for large diameters; the second is to achieve an inner wall of the hose as smooth as possible, permitting therefore an optimal passage of fluids inside, resulting in a higher speed of transfer; the third is to maintain, all during the factory production process, a minimal contact surface between said hose and a mandrel on which it is constructed, and to facilitate therefore, at the end of said process, the longitudinal removal of said hose from the mandrel, maintaining at the same time a minimal friction.

The present invention will now be described for illustrative but not limitative purposes, according to its preferred embodiments, with particular reference to figures of the enclosed drawings, wherein:
**Figure 1** is a perspective view of a partially sectioned end belonging to a composite hose, according to the prior art, where the main components are shown, and they are represented by a cylindrical lateral wall situated between an inner reinforcement spiral and an outer reinforcement spiral;
**Figure 2** is a perspective view of a particular belonging to an improved composite hose, according to the present invention, where the inner and outer reinforcement spirals have a triangular cross-section;
**Figure 3** is a lateral view of a particular belonging to the same improved composite hose of **Figure 2****,** where said triangular cross-section of the inner and outer reinforcement spirals is better visualized;
**Figure 4** is a lateral view of the same improved composite hose of **Figure 2****,** as a whole and having respective connection elements on its ends;
**Figure 5** is a front view of the same improved composite hose of **Figure 4****,** visualized at one of its ends;
**Figure 6** is a perspective view of the same improved composite hose of **Figures 4 and 5****,** where its outer reinforcement spiral is better visualized;
**Figure 7** is a front view of a first possible cross-section of one of the reinforcement spirals, that approximates the shape of a triangle, where all the vertexes are rounded, and at least one side is curved with a concavity directed outside;
**Figure 8** is a front view of a first possible cross-section of one of the reinforcement spirals, that approximates the shape of a triangle, where all the vertexes are rounded, and all the sides are curved with a concavity directed outside;
**Figure 9** is a perspective view of a tract of the same hose of **Figure 2****,** where its main components are better shown, composed of a cylindrical lateral wall situated between an inner reinforcement spiral and an outer reinforcement spiral;
**Figure 10** is a perspective view in detail of the same tract of hose of **Figure 2****,** where the cross-sections of said inner and outer reinforcement spirals, that approximate the shape of a triangle, are better visualized;
**Figure 11** is a perspective view in detail of the same tract of hose of **Figure 2****,** where the cross-sections of said inner and outer reinforcement spirals, that approximate the shape of a triangle, are further visualized;
**Figure 12** is a schematic view of the flow lines related to a fluid that flows inside a composite tube, in condition of a laminar motion, with an obstacle represented by a transversal element having a circular cross-section;
**Figure 13** is a schematic view of the flow lines related to a fluid that flows inside a composite tube, in condition of a transition from a laminar motion to a turbulent motion, with the same obstacle of **Figure 12****;**
**Figure 14** is a schematic view of the flow lines related to a fluid that flows inside a composite tube, in condition of a turbulent motion, with the same obstacle of **Figure 12****.**

It is here underlined that only few of the many conceivable embodiments of the present invention are described, which are just some specific non-limiting examples, having the possibility to describe many other embodiments based on the disclosed technical solutions of the present invention.

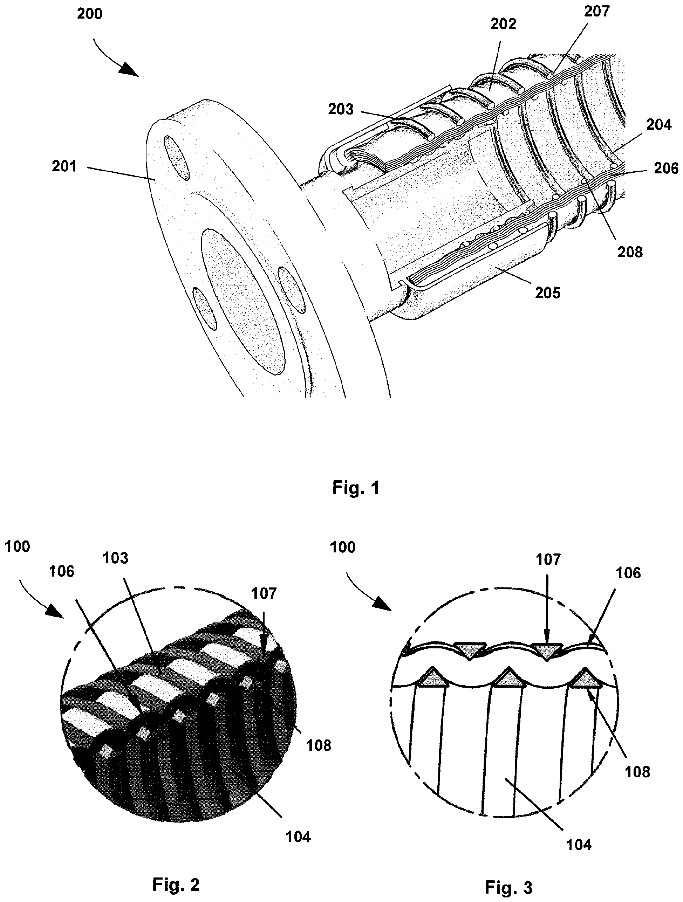

**Figure 1** shows a partially sectioned end belonging to a flexible composite hose **200,** for transportation of fluids in the field of chemical and/or petrochemical industry, according to the prior art, where the main components are shown, and they are represented by a cylindrical multi-layered surface **206,** composed in turn of some layers made of different materials, situated between an inner reinforcement spiral **204** and an outer reinforcement spiral **203,** so that the inner and outer spirals **204, 203** express some opposing forces that maintain a robust general structure of the hose **200.**

Either the inner reinforcement spiral **204** and the outer reinforcement spiral **203** are composed of a metallic wire, that is helically wrapped around, where the same metallic wire has respective cross-sections **208, 207** having the shape of a circle.

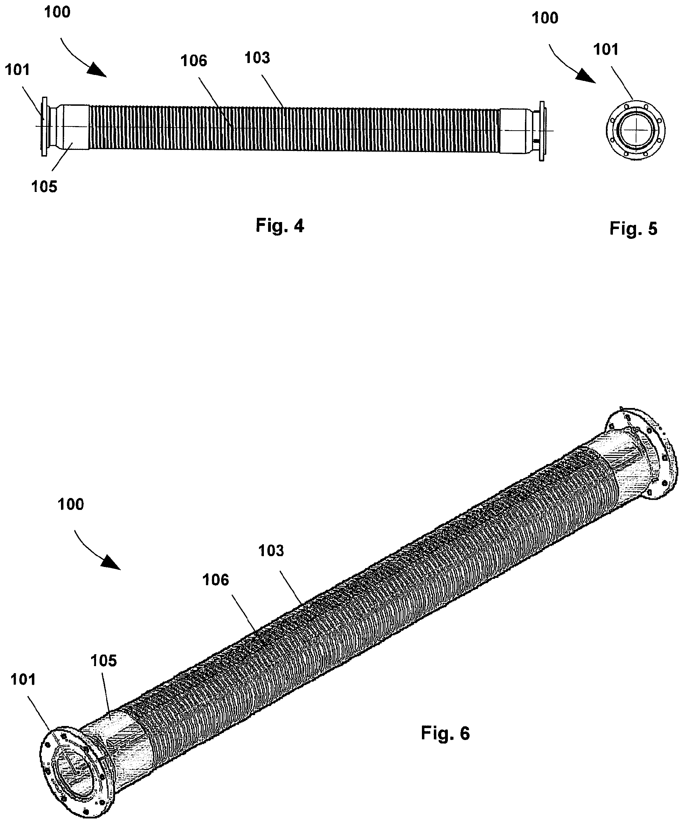

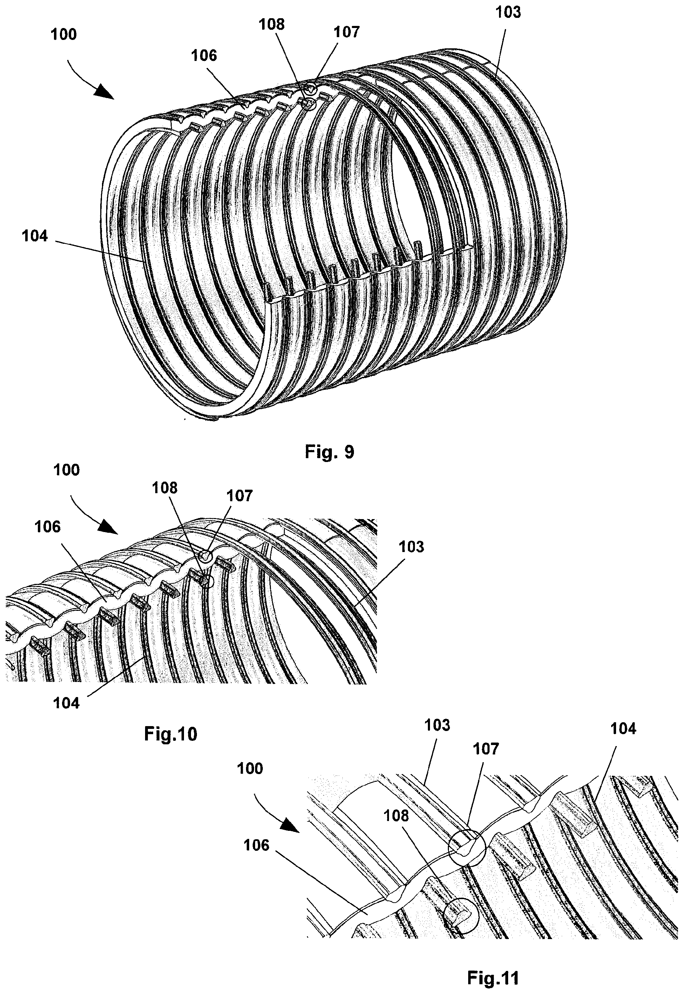

Instead, **Figures 4, 5****,** **6** **and** **9, 10****, 11** show a flexible composite hose **100,** for transportation of fluids in the field of chemical and/or petrochemical industry, according to the present invention.

The main components, shown in details in **Figures 2 and 3****,** are represented by a cylindrical multi-layered surface **106,** composed in turn of some layers made of different materials, situated between an inner reinforcement spiral **104** and an outer reinforcement spiral **103,** so that the inner and outer spirals **104, 103** express some opposing forces that maintain a robust general structure of the hose **100.**

According to a first embodiment of the present invention, said inner reinforcement spiral **104** is composed of a metallic wire, that is helically wrapped around, where the same metallic wire has a cross-section **108** having a shape that approximates the shape of a polygon **210.**

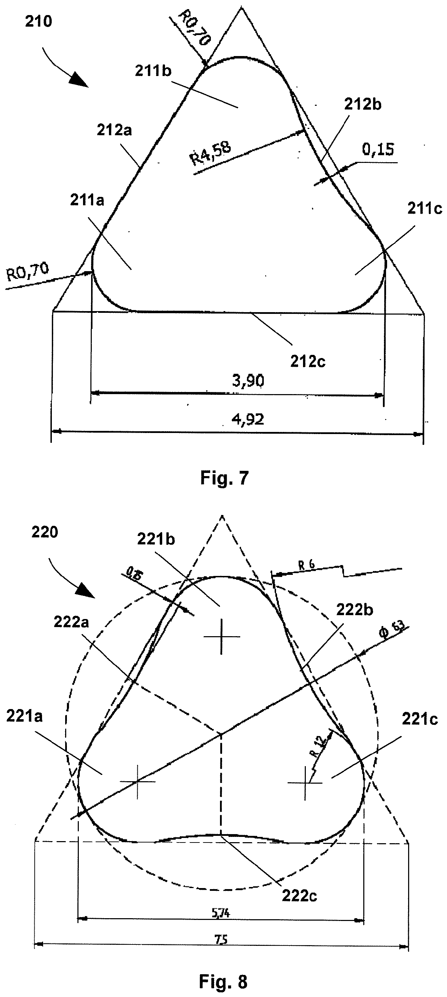

More exactly it has a shape of a polygon **210,** as that shown in **Figure 7****,** in which: all the vertexes are rounded, and at least one side is curved with a concavity directed outside.

Said cross-section **108** approximating a polygon **210** presents said curved side **212b** placed aligned to the inner wall of the hose **100,** and the opposite vertex **211a** placed as a cusp into the inner side of said cylindrical multi-layered surface **106,** all along the length of the hose **100.**

In such a way, three effects are achieved. The first is that said inner spiral **104** is anchored more effectively to said cylindrical multi-layered surface **106,** avoiding therefore any sliding motion, and increasing strength and robustness of the general structure of the hose **100,** even for large diameters. The second is to achieve an inner wall of the hose **100** as smooth as possible, permitting therefore an optimal passage of fluids inside, resulting in a higher speed of transfer. The third is to maintain, all during the factory production process, a minimal contact surface between said hose **100** and a mandrel on which it is constructed, and to facilitate therefore, at the end of said process, the longitudinal removal of said hose **100** from the mandrel, maintaining at the same time a minimal friction.

According to a second embodiment of the present invention, said outer reinforcement spiral **103** is composed of a metallic wire, that is helically wrapped around, where the same metallic wire has a cross-section **107** having a shape that also approximates the shape of a polygon **210.**

More exactly it has a shape of a polygon **210,** as that shown in **Figure 7****,** in which: all the vertexes are rounded, and at least one side is curved with a concavity directed outside.

Said cross-section **107** approximating a polygon **210** presents said curved side **212b** placed aligned to the outer wall of the hose **100,** and the opposite vertex **211a** placed as a cusp into the outer side of said cylindrical multi-layered surface **106,** all along the length of the hose **100.**

In such a way, an effect is achieved that said outer spiral **103** is anchored more effectively to said cylindrical multi-layered surface **106,** avoiding therefore any sliding motion, and increasing strength and robustness of the general structure of the hose **100,** even for large diameters.

According to a third embodiment of the present invention, said inner reinforcement spiral **104** is composed of a metallic wire, that is helically wrapped around, where the same metallic wire has a cross-section **108** having a shape that approximates the shape of a polygon **220.**

More exactly it has a shape of a polygon **220,** as that shown in **Figure 8****,** in which: all the vertexes are rounded, and all the sides are curved with a concavity directed outside.

Said cross-section **108** approximating a polygon **220** presents one of said curved sides, **222a or 222b or 222c,** placed aligned to the inner wall of the hose **100,** and the opposite vertex, 221c, 221a or 221b placed as a cusp into the inner side of said cylindrical multi-layered surface **106,** all along the length of the hose **100.**

In such a way, it is achieved, in addition to the three previous effects, the additional effect that said inner spiral **104** is anchored more effectively to said cylindrical multi-layered surface **106,** because the contact surfaces of curved sides **222a, 222b** embed into the multi-layer **106** and adapt the tissues to the profile.

According to a fourth embodiment of the present invention, said outer reinforcement spiral **103** is composed of a metallic wire, that is helically wrapped around, where the same metallic wire has a cross-section **107** having a shape that also approximates the shape of a polygon **220.**

More exactly it has a shape of a polygon **220,** as that shown in **Figure 8****,** in which: all the vertexes are rounded, and all the sides are curved with a concavity directed outside.

Said cross-section **107** approximating a polygon 220 presents one of said curved sides, **222a or 222b or 222c,** placed aligned to the inner wall of the hose **100,** and the opposite vertex, 221c, 221a or 221b placed as a cusp into the outer side of said cylindrical multi-layered surface **106,** all along the length of the hose **100.**

In such a way, it is achieved, in addition to the three previous effects, the following additional two effects. The first that said outer spiral **103** is anchored more effectively to said cylindrical multi-layered surface **106,** because the contact surfaces of curved sides **222a, 222b** embed into the multi-layer **106** and adapt the tissues to the profile. The second is to facilitate, during the factory production process, the application of the metallic wire on a mandrel, in order to achieve, first the inner spiral **104,** and then the outer spiral **103** of the composite hose **100.** In fact, according to the fact that all the sides **222a, 222b** are equal, there is not a preferred side on the wire to be addressed to the same mandrel, and furthermore it is minimized the angle of rotation of the same wire, in the passage from the production of the inner wire **104** to the outer wire **103,** by using the same wire.

According to the principles of the present invention, said polygon **210 or 220,** whose shape is approximated by the cross-section **108** of said reinforcement wire, that composes said inner reinforcement spiral **104,** can be represented by: a triangle, or a square, or a pentagon, or a hexagon, etc., and in the same way, said polygon **210 or 220,** whose shape is approximated by the cross-section **107** of said reinforcement wire, that composes said outer reinforcement spiral **103,** can be represented by: a triangle, or a square, or a pentagon, or a hexagon, etc.

In the flexible composite hose **100,** said cylindrical multi-layered surface **106** can be composed of layers made of different types of materials, as in example: *polypropylene, polyethylene, polyester,* PTFE, etc.
In such a way, the composite hose **100** results to have a wide range of applications, in conditions of different pressures and temperatures, and being compatible and usable for the passage of various types of chemical products, having different chemical-physical characteristics.

As above described, the effect of the present invention to achieve an inner surface of hose **100** as smooth as possible, causes an optimal passage of fluids inside, and therefore a high speed of transfer.
This fact arises from study of turbulence phenomena that are observed when there are obstacles or quick variation of shape in the hose **100** where the fluid flows inside. In fact, deformation in flow lines, induced by obstacle, are propagated by the fluid viscosity, with a possible generation of vortexes.

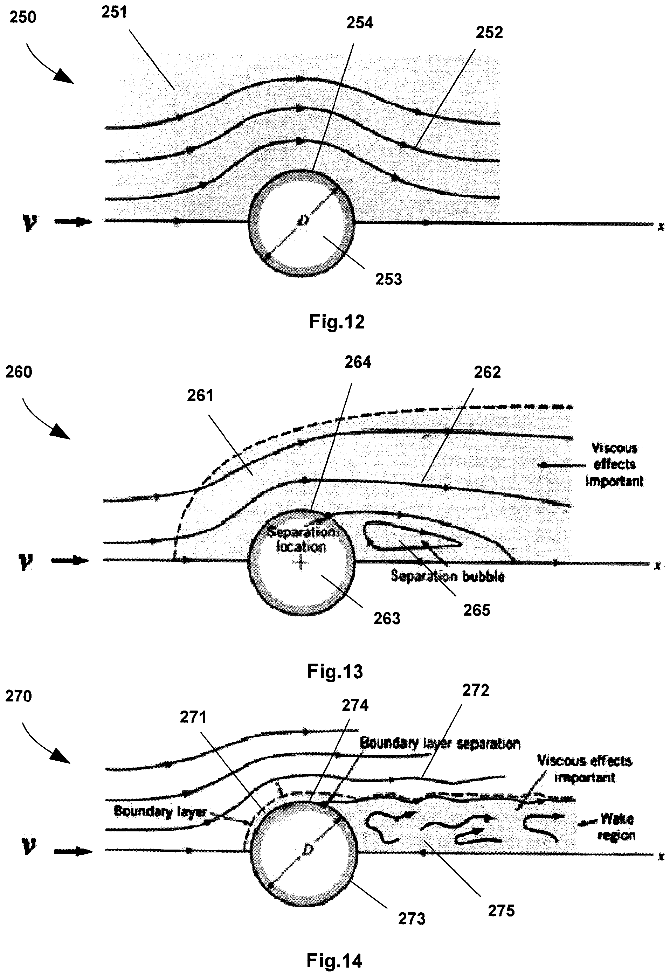

**Figures 12, 13 and 14****,** show the flow in a hose, around a circle having diameter D, placed with the axis that is normal to the figure, in three different flow situations. The same circle represents exactly the inner reinforcement wire having a round shape, for the production of composite hoses according to the prior art. The reinforcement wire emerges by half size of its diameter into the hose. The number of Reynolds represents the ratio between inertial effects and viscous effects.

With reference to low values of flow **250 (****Figure 12****)** the viscosity prevails: the presence of obstacle **253** affects the current lines **252** in a wide region **251,** in respect to diameter D, in any directions in respect to the flow.

By increasing the flow **260 (****Figure 13****),** the region **261** preceding the cylinder affected by the viscous distortion of flow lines **262** decreases: the effects of the presence of obstacle **263** are moved down and the flow loses its symmetry. Another consequence of the influence of the inertial effects is represented by the fluid layer in contact with the object.

In a condition of flow **270 (****Figure 14****)** characterized by very high Reynolds numbers, the region **275** affected by the presence of the obstacle **272** is located quite completely behind it, having a very long wake region, irregular, unstable, and highly characterized by turbulence.

The turbulence slows down significantly the flow inside the hose, leading to the induced effect to decrease the fluid capacity. That increases the time of load/unload operations in tankers or tank ships, even considering that for security reasons it is not possible to increase pressures during operations.

For this reason, by changing the geometry of cross-section in the inner wire, from rounded to polygonal or near-triangular, according to principles of the present invention, it is achieved the result to avoid quite totally any obstacle inside the hose, keeping a situation of laminar motion in the fluid flow instead of a situation of turbulent motion.

Therefore, the above examples show that the present invention reaches all the expected objectives. In particular, it permits to achieve a flexible composite hose for transportation of fluids, in the field of chemical and/or petrochemical industry, having an inner reinforcement spiral and an outer reinforcement spiral, where the general structure of the hose is kept robust and compact, even for hoses having a large diameter, in front of intense external forces, narrow curving angles, and a use in the long term.

Furthermore, the invention allows that the inner wall hose presents a surface that is as smooth as possible, having few protrusions, achieving an optimal passage of fluids characterised by a high speed of transfer, minimizing the pressure drop caused by friction, turbulence, partial occlusions and/or other fluid-dynamic effects.

Further according to the invention, even said inner wall hose presenting a surface as smooth as possible, and having few protrusions, it results to be not perfectly flat, so that to minimize the contact area with a mandrel, during the factory production process, and therefore to maintain a minimal friction that facilitates the longitudinal removal of said hose from the same mandrel.

Finally according to the invention, the composite tube continues to have a simple structure as well as in the prior art, that means that is composed by few essential components, in order to be produced on a large industrial scale, by a production process that is economically sustainable, competitive on the market, technically efficient, and using materials that are common and easy to find.

The present invention has been described for illustrative but not limitative purposes, according to its preferred embodiments, but it is clear that modifications and/or changes can be introduced by those skilled in the art as long as they do not depart from the scope, which is defined in the enclosed claims.

## Claims

1. A flexible composite hose (100), for transportation of fluids in the field of chemical and/or petrochemical industry, comprising:
- a cylindrical multi-layered surface (106), composed of some layers made of different materials, situated between an inner reinforcement spiral (104) and an outer reinforcement spiral (103), so that the inner and outer spirals (104, 103) express some opposing forces that maintain a robust general structure of the hose (100),
**characterized in that**:
- said inner reinforcement spiral (104) is composed of a metallic wire, that is helically wrapped around, where the same metallic wire has a cross-section (108) having a shape that approximates the shape of a polygon (210), more exactly it has a shape of a polygon (210) in which: all the vertexes are rounded, and at least one side is curved with a concavity directed outside;
- said cross-section (108) approximating a polygon (210) presents said curved side (212b) placed aligned to the inner wall of the hose (100), and the opposite vertex (211a) placed as a cusp into the inner side of said cylindrical multi-layered surface (106), all along the length of the hose (100),
so that three effects are achieved: the first is that said inner spiral (104) is anchored more effectively to said cylindrical multi-layered surface (106), avoiding therefore any sliding motion, and increasing strength and robustness of the general structure of the hose (100), even for large diameters; the second is to achieve an inner wall of the hose (100) as smooth as possible, permitting therefore an optimal passage of fluids inside, resulting in a higher speed of transfer; the third is to maintain, all during the factory production process, a minimal contact surface between said hose (100) and a mandrel on which it is constructed, and to facilitate therefore, at the end of said process, the longitudinal removal of said hose (100) from the mandrel, maintaining at the same time a minimal friction.

2. A flexible composite hose (100), for transportation of fluids in the field of chemical and/or petrochemical industry, according to previous claim 1, **characterized in that**:
- said outer reinforcement spiral (103) is composed of a metallic wire, that is helically wrapped around, where the same metallic wire has a cross-section (107) having a shape that also approximates the shape of a polygon (210), more exactly it has a shape of a polygon (210) in which: all the vertexes are rounded, and at least one side is curved with a concavity directed outside;
- said cross-section (107) approximating a polygon (210) presents said curved side (212b) placed aligned to the outer wall of the hose (100), and the opposite vertex (211a) placed as a cusp into the outer side of said cylindrical multi-layered surface (106), all along the length of the hose (100),
so that an effect is achieved that said outer spiral (103) is anchored more effectively to said cylindrical multi-layered surface (106), avoiding therefore any sliding motion, and increasing strength and robustness of the general structure of the hose (100), even for large diameters.

3. A flexible composite hose (100), for transportation of fluids in the field of chemical and/or petrochemical industry, according to previous claim 1, **characterized in that**:
- said inner reinforcement spiral (104) is composed of a metallic wire, that is helically wrapped around, where the same metallic wire has a cross-section (108) having a shape that approximates the shape of a polygon (220), more exactly it has a shape of a polygon (220) in which: all the vertexes are rounded, and all the sides are curved with a concavity directed outside;
- said cross-section (108) approximating a polygon (220) presents one of said curved sides, (222a) or (222b) or (222c), placed aligned to the inner wall of the hose (100), and the opposite vertex, (221c or 221a or 221b) placed as a cusp into the inner side of said cylindrical multi-layered surface (106), all along the length of the hose (100),
so that it is achieved, in addition to the three said effects of previous claim 1, the additional effect that said inner spiral (104) is anchored more effectively to said cylindrical multi-layered surface (106), because the contact surfaces of curved sides (222a, 222b) embed into the multi-layer (106) and adapt the tissues to the profile.

4. A flexible composite hose (100), for transportation of fluids in the field of chemical and/or petrochemical industry, according to previous claim 3, **characterized in that**:
- said outer reinforcement spiral (103) is composed of a metallic wire, that is helically wrapped around, where the same metallic wire has a cross-section (107) having a shape that also approximates the shape of a polygon (220), more exactly it has a shape of a polygon (220) in which: all the vertexes are rounded, and all the sides are curved with a concavity directed outside;
- said cross-section (107) approximating a polygon (210) presents one of said curved sides, (222a) or (222b) or (222c), placed aligned to the outer wall of the hose (100),
and the opposite vertex, (221c or 221a or 221b) placed as a cusp into the outer side of said cylindrical multi-layered surface (106), all along the length of the hose (100),
so that it is achieved, in addition to the three said effects of previous claim 3, the following additional two effects: the first that said outer spiral (103) is anchored more effectively to said cylindrical multi-layered surface (106), because the contact surfaces of curved sides (222a, 222b) embed into the multi-layer (106) and adapt the tissues to the profile; the second is to facilitate, during the factory production process, the application of the metallic wire on a mandrel, in order to achieve, first the inner spiral (104), and then the outer spiral (103) of the composite hose (100); in fact, according to the fact that all the sides (222a, 222b) are equal, there is not a preferred side on the wire to be addressed to the same mandrel, and furthermore it is minimized the angle of rotation of the same wire, in the passage from the production of the inner wire (104) to the outer wire (103), by using the same wire.

5. A flexible composite hose (100), for transportation of fluids in the field of chemical and/or petrochemical industry, according to one or more of previous claims, **characterized in that**:
- said polygon (210) or (220), whose shape is approximated by the cross-section (108) of said reinforcement wire, that composes said inner reinforcement spiral (104), can be represented by: a triangle, or a square, or a pentagon, or a hexagon, etc.

6. A flexible composite hose (100), for transportation of fluids in the field of chemical and/or petrochemical industry, according to one or more of previous claims, **characterized in that**:
- said polygon (210) or (220), whose shape is approximated by the cross-section (107) of said reinforcement wire, that composes said outer reinforcement spiral (103), can be represented by: a triangle, or a square, or a pentagon, or a hexagon, etc.

7. A flexible composite hose (100), for transportation of fluids in the field of chemical and/or petrochemical industry, according to one or more of previous claims, **characterized in that**:
- said cylindrical multi-layered surface (106) is composed of layers made of different types of materials, as in example: *polypropylene, polyethylene, polyester,* PTFE, etc., so that the composite hose (100) results to have a wide range of applications, in conditions of different pressures and temperatures, and being compatible and usable for the passage of various types of chemical products, having different chemical-physical characteristics.

## Patentansprüche

1. Ein flexibler Verbundschlauch (100) zum Transport von Flüssigkeiten im Bereich der chemischen und/oder petrochemischen Industrie, umfassend:
- eine zylindrische mehrschichtige Oberfläche (106), bestehend aus mehreren Schichten unterschiedlicher Materialien, die zwischen einer inneren Verstärkungsspirale (104) und einer äußeren Verstärkungsspirale (103) liegt, so dass die innere und äußere Spirale (104, 103) einige Gegenkräfte zum Ausdruck bringen, die eine robuste Gesamtstruktur des Schlauchs (100) aufrechterhalten,
**dadurch gekennzeichnet, dass**:
- die innere Verstärkungsspirale (104) aus einem spiralförmig umwickelten Metalldraht besteht, wobei derselbe Metalldraht einen Querschnitt (108) mit einer Form aufweist, die der Form eines Polygons (210) näher kommt, genauer gesagt es hat die Form eines Polygons (210), bei dem: alle Spitzen abgerundet sind und mindestens eine Seite mit einer nach außen gerichteten Konkavität gekrümmt ist;
- der Querschnitt (108), der sich einem Polygon (210) annähert, weist die gekrümmte Seite (212b) auf, die an der Innenwand des Schlauchs (100) ausgerichtet ist, und den gegenüberliegenden Scheitelpunkt (211a), der als Spitze in der Innenseite des Schlauchs platziert ist die zylindrische mehrschichtige Oberfläche (106) über die gesamte Länge des Schlauchs (100),
so dass drei Effekte erzielt werden: Der erste besteht darin, dass die innere Spirale (104) effektiver an der zylindrischen mehrschichtigen Oberfläche (106) verankert wird, wodurch jegliche Gleitbewegung vermieden wird und die Festigkeit und Robustheit der Gesamtstruktur des Schlauchs erhöht wird (100), auch für große Durchmesser; die zweite besteht darin, eine möglichst glatte Innenwand des Schlauchs (100) zu erreichen, um so einen optimalen Durchgang der Flüssigkeiten im Inneren zu ermöglichen, was zu einer höheren Übertragungsgeschwindigkeit führt; Die dritte besteht darin, während des gesamten Produktionsprozesses im Werk eine minimale Kontaktfläche zwischen dem Schlauch (100) und einem Dorn, auf dem er aufgebaut ist, aufrechtzuerhalten und daher am Ende des Prozesses das Entfernen des Schlauchs in Längsrichtung zu erleichtern (100) vom Dorn, wobei gleichzeitig eine minimale Reibung aufrechterhalten wird.

2. Flexibler Verbundschlauch (100) zum Transport von Flüssigkeiten im Bereich der chemischen und/oder petrochemischen Industrie nach Anspruch 1, **dadurch gekennzeichnet, dass**:
- die äußere Verstärkungsspirale (103) aus einem spiralförmig umwickelten Metalldraht besteht, wobei der Metalldraht im Querschnitt (107) eine Form aufweist, die ebenfalls der Form eines Vielecks (210) näher kommt Es hat genau die Form eines Polygons (210), bei dem: alle Eckpunkte abgerundet sind und mindestens eine Seite mit einer nach außen gerichteten Konkavität gekrümmt ist;
- der Querschnitt (107), der sich einem Polygon (210) annähert, weist die gekrümmte Seite (212b) auf, die an der Außenwand des Schlauchs (100) ausgerichtet ist, und den gegenüberliegenden Scheitelpunkt (211a), der als Spitze in der Außenseite des Schlauchs platziert ist die zylindrische mehrschichtige Oberfläche (106) über die gesamte Länge des Schlauchs (100),
so dass die Wirkung erzielt wird, dass die äußere Spirale (103) effektiver an der zylindrischen mehrschichtigen Oberfläche (106) verankert wird, wodurch jegliche Gleitbewegung vermieden wird und die Festigkeit und Robustheit der Gesamtstruktur des Schlauchs (100) erhöht wird. auch für große Durchmesser.

3. Ein flexibler Verbundschlauch (100) zum Transport von Flüssigkeiten im Bereich der chemischen und/oder petrochemischen Industrie nach dem vorherigen Anspruch 1, **dadurch gekennzeichnet, dass**:
- die innere Verstärkungsspirale (104) aus einem spiralförmig umwickelten Metalldraht besteht, wobei derselbe Metalldraht einen Querschnitt (108) mit einer Form aufweist, die der Form eines Polygons (220) näher kommt, genauer gesagt Es hat die Form eines Polygons (220), bei dem: alle Scheitelpunkte abgerundet sind und alle Seiten mit einer nach außen gerichteten Konkavität gekrümmt sind;
- der Querschnitt (108), der sich einem Polygon (220) annähert, weist eine der gekrümmten Seiten (222a) oder (222b) oder (222c) auf, die an der Innenwand des Schlauchs (100) ausgerichtet sind, und den gegenüberliegenden Scheitelpunkt , (221c) oder (221a) oder (221b), die als Spitze in der Innenseite der zylindrischen mehrschichtigen Oberfläche (106) über die gesamte Länge des Schlauchs (100) platziert sind,
Damit wird zusätzlich zu den drei genannten Wirkungen des vorherigen Anspruchs 1 der zusätzliche Effekt erreicht, dass die genannte Innenspirale (104) effektiver an der genannten zylindrischen mehrschichtigen Oberfläche (106) verankert wird, da die Kontaktflächen gekrümmte Seiten aufweisen (222a, 222b) in die Mehrschicht (106) einbetten und die Gewebe an das Profil anpassen.

4. Flexibler Verbundschlauch (100) zum Transport von Flüssigkeiten im Bereich der chemischen und/oder petrochemischen Industrie nach Anspruch 3, **dadurch gekennzeichnet, dass**:
- die äußere Verstärkungsspirale (103) aus einem schraubenförmig umwickelten Metalldraht besteht, wobei der Metalldraht im Querschnitt (107) eine Form aufweist, die ebenfalls annähernd die Form eines Polygons (220) aufweist Es hat genau die Form eines Polygons (220), bei dem: alle Spitzen abgerundet sind und alle Seiten mit einer nach außen gerichteten Konkavität gekrümmt sind;
- der Querschnitt (107), der sich einem Polygon (210) annähert, weist eine der gekrümmten Seiten (222a) oder (222b) oder (222c) auf, die mit der Außenwand des Schlauchs (100) ausgerichtet sind, und den gegenüberliegenden Scheitelpunkt , (221c) oder (221a) oder (221b), die als Spitze in der Außenseite der zylindrischen mehrschichtigen Oberfläche (106) über die gesamte Länge des Schlauchs (100) platziert sind,
so dass zusätzlich zu den drei genannten Effekten des vorherigen Anspruchs 3 die folgenden zusätzlichen zwei Effekte erreicht werden: Der erste, dass die genannte äußere Spirale (103) effektiver an der genannten zylindrischen mehrschichtigen Oberfläche (106) verankert wird, weil die Kontaktflächen der gekrümmten Seiten (222a, 222b) betten sich in die Mehrschicht (106) ein und passen das Gewebe an das Profil an; Die zweite besteht darin, während des Fabrikproduktionsprozesses das Aufbringen des Metalldrahts auf einen Dorn zu erleichtern, um zunächst die innere Spirale (104) und dann die äußere Spirale (103) des Verbundschlauchs (100) zu erhalten. ; Tatsächlich gibt es aufgrund der Tatsache, dass alle Seiten (222a, 222b) gleich sind, keine bevorzugte Seite des Drahtes, die an denselben Dorn gerichtet ist, und außerdem wird der Drehwinkel desselben Drahtes minimiert, im Übergang von der Herstellung des Innendrahtes (104) zum Außendraht (103) unter Verwendung desselben Drahtes.

5. Flexibler Verbundschlauch (100) zum Transport von Flüssigkeiten im Bereich der chemischen und/oder petrochemischen Industrie nach einem oder mehreren der vorherigen Ansprüche, **dadurch gekennzeichnet, dass**:
- das Polygon (210) oder (220), dessen Form durch den Querschnitt (108) des Verstärkungsdrahtes, aus dem die innere Verstärkungsspirale (104) besteht, angenähert wird, kann dargestellt werden durch: ein Dreieck oder ein Quadrat, oder ein Fünfeck oder ein Sechseck usw.

6. Flexibler Verbundschlauch (100) zum Transport von Flüssigkeiten im Bereich der chemischen und/oder petrochemischen Industrie nach einem oder mehreren der vorherigen Ansprüche, **dadurch gekennzeichnet, dass**:
- das Polygon (210) oder (220), dessen Form durch den Querschnitt (107) des Verstärkungsdrahtes, aus dem die äußere Verstärkungsspirale (103) besteht, angenähert wird, kann dargestellt werden durch: ein Dreieck oder ein Quadrat, oder ein Fünfeck oder ein Sechseck usw.

7. Flexibler Verbundschlauch (100) zum Transport von Flüssigkeiten im Bereich der chemischen und/oder petrochemischen Industrie nach einem oder mehreren der vorherigen Ansprüche, **dadurch gekennzeichnet, dass**:
- die zylindrische mehrschichtige Oberfläche (106) besteht aus Schichten aus verschiedenen Materialtypen, wie zum Beispiel: Polypropylen, Polyethylen, Polyester, PTFE usw.,
so dass der Verbundschlauch (100) ein breites Anwendungsspektrum unter Bedingungen unterschiedlicher Drücke und Temperaturen aufweist und für den Durchgang verschiedener Arten chemischer Produkte mit unterschiedlichen chemischphysikalischen Eigenschaften kompatibel und verwendbar ist.

## Revendications

1. Tuyau composite flexible (100), pour le transport de fluides dans le domaine de l'industrie chimique et/ou pétrochimique, comprenant :
- une surface cylindrique multicouche (106), composée de quelques couches constituées de matériaux différents, située entre une spirale de renfort interne (104) et une spirale de renfort externe (103), de sorte que les spirales interne et externe (104, 103) exprimer des forces opposées qui maintiennent une structure générale robuste du tuyau (100),
**caractérisé en ce que** :
- ladite spirale de renfort interne (104) est composée d'un fil métallique enroulé en hélice, le même fil métallique ayant une section transversale (108) ayant une forme qui se rapproche de la forme d'un polygone (210), plus exactement il a une forme de polygone (210) dont : tous les sommets sont arrondis, et au moins un côté est courbé avec une concavité dirigée vers l'extérieur ;
- ladite section transversale (108) se rapprochant d'un polygone (210) présente ledit côté incurvé (212b) placé aligné sur la paroi interne du tuyau (100), et le sommet opposé (211a) placé comme une cuspide dans le côté interne de ladite surface cylindrique multicouche (106), sur toute la longueur du tuyau (100),
de sorte que trois effets sont obtenus : le premier est que ladite spirale interne (104) est ancrée plus efficacement à ladite surface cylindrique multicouche (106), évitant ainsi tout mouvement de glissement, et augmentant la résistance et la robustesse de la structure générale du tuyau (100), même pour les grands diamètres ; la seconde consiste à obtenir une paroi interne du tuyau (100) aussi lisse que possible, permettant ainsi un passage optimal des fluides à l'intérieur, entraînant une vitesse de transfert plus élevée ; le troisième est de maintenir, tout au long du processus de production en usine, une surface de contact minimale entre ledit tuyau (100) et un mandrin sur lequel il est construit, et de faciliter ainsi, à la fin dudit processus, le retrait longitudinal dudit tuyau (100) du mandrin, en maintenant en même temps un frottement minimal.

2. Tuyau composite flexible (100), pour le transport de fluides dans le domaine de l'industrie chimique et/ou pétrochimique, selon la revendication précédente 1, **caractérisé en ce que** :
- ladite spirale de renfort externe (103) est composée d'un fil métallique enroulé en hélice, le même fil métallique ayant une section transversale (107) ayant une forme qui se rapproche également de la forme d'un polygone (210), plus exactement il a la forme d'un polygone (210) dont : tous les sommets sont arrondis, et au moins un côté est courbé avec une concavité dirigée vers l'extérieur ;
- ladite section transversale (107) se rapprochant d'un polygone (210) présente ledit côté incurvé (212b) placé aligné sur la paroi externe du tuyau (100), et le sommet opposé (211a) placé comme une cuspide dans le côté externe de ladite surface cylindrique multicouche (106), sur toute la longueur du tuyau (100),
de sorte qu'un effet soit obtenu selon lequel ladite spirale externe (103) est ancrée plus efficacement à ladite surface cylindrique multicouche (106), évitant ainsi tout mouvement de glissement, et augmentant la résistance et la robustesse de la structure générale du tuyau (100), même pour les grands diamètres.

3. Tuyau composite flexible (100), pour le transport de fluides dans le domaine de l'industrie chimique et/ou pétrochimique, selon la revendication précédente 1, **caractérisé en ce que** :
- ladite spirale de renfort interne (104) est composée d'un fil métallique enroulé en hélice, le même fil métallique ayant une section transversale (108) ayant une forme qui se rapproche de la forme d'un polygone (220), plus exactement il a une forme de polygone (220) dont : tous les sommets sont arrondis, et tous les côtés sont courbés avec une concavité dirigée vers l'extérieur ;
- ladite section transversale (108) se rapprochant d'un polygone (220) présente l'un desdits côtés courbes, (222a) ou (222b) ou (222c), placé aligné avec la paroi interne du tuyau (100), et le sommet opposé , (221c) ou (221a) ou (221b), placé comme une cuspide dans le côté interne de ladite surface cylindrique multicouche (106), sur toute la longueur du tuyau (100),
de sorte qu'en plus des trois effets mentionnés dans la revendication précédente 1, on obtient l'effet supplémentaire selon lequel ladite spirale intérieure (104) est ancrée plus efficacement à ladite surface cylindrique multicouche (106), car les surfaces de contact des côtés incurvés (222a, 222b) s'intègrent dans la multicouche (106) et adaptent les tissus au profil.

4. Tuyau composite flexible (100), pour le transport de fluides dans le domaine de l'industrie chimique et/ou pétrochimique, selon la revendication précédente 3, **caractérisé en ce que** :
- ladite spirale de renfort externe (103) est composée d'un fil métallique enroulé en hélice, le même fil métallique ayant une section transversale (107) ayant une forme qui se rapproche également de la forme d'un polygone (220), plus exactement il a la forme d'un polygone (220) dont : tous les sommets sont arrondis, et tous les côtés sont courbés avec une concavité dirigée vers l'extérieur ;
- ladite section transversale (107) se rapprochant d'un polygone (210) présente l'un desdits côtés courbes, (222a) ou (222b) ou (222c), placé aligné sur la paroi externe du tuyau (100), et le sommet opposé , (221c) ou (221a) ou (221b), placé comme une cuspide dans le côté extérieur de ladite surface cylindrique multicouche (106), sur toute la longueur du tuyau (100),
de sorte qu'en plus des trois effets mentionnés dans la revendication précédente 3, les deux effets supplémentaires suivants sont obtenus : le premier est que ladite spirale externe (103) est ancrée plus efficacement à ladite surface cylindrique multicouche (106), car le des surfaces de contact des côtés incurvés (222a, 222b) s'intègrent dans la multicouche (106) et adaptent les tissus au profil ; la seconde est de faciliter, lors du processus de production en usine, l'application du fil métallique sur un mandrin, afin de réaliser, d'abord la spirale intérieure (104), puis la spirale extérieure (103) du tuyau composite (100). ; en effet, du fait que tous les côtés (222a, 222b) sont égaux, il n'y a pas de côté préféré sur le fil pour être adressé au même mandrin, et en outre on minimise l'angle de rotation du même fil, dans le passage de la réalisation du fil intérieur (104) au fil extérieur (103), en utilisant le même fil.

5. Tuyau composite flexible (100), pour le transport de fluides dans le domaine de l'industrie chimique et/ou pétrochimique, selon une ou plusieurs des revendications précédentes, **caractérisé en ce que** :
- ledit polygone (210) ou (220), dont la forme est approximée par la section transversale (108) dudit fil de renfort, qui compose ladite spirale intérieure de renfort (104), peut être représenté par : un triangle, ou un carré, ou un pentagone, ou un hexagone, etc.

6. Tuyau composite flexible (100), pour le transport de fluides dans le domaine de l'industrie chimique et/ou pétrochimique, selon une ou plusieurs des revendications précédentes, **caractérisé en ce que** :
- ledit polygone (210) ou (220), dont la forme est approximée par la section transversale (107) dudit fil de renfort, qui compose ladite spirale extérieure de renfort (103), peut être représenté par : un triangle, ou un carré, ou un pentagone, ou un hexagone, etc.

7. Tuyau composite flexible (100), pour le transport de fluides dans le domaine de l'industrie chimique et/ou pétrochimique, selon une ou plusieurs des revendications précédentes, **caractérisé en ce que** :
- ladite surface cylindrique multicouche (106) est composée de couches constituées de différents types de matériaux, comme par exemple : polypropylène, polyéthylène, polyester, PTFE, etc.,
de telle sorte que le tuyau composite (100) présente une large gamme d'applications, dans des conditions de pressions et de températures différentes, et est compatible et utilisable pour le passage de divers types de produits chimiques, ayant des caractéristiques physico-chimiques différentes.
